(19) Europäisches Patentamt European Patent Office Office européen des brevets

(11) **EP 2 202 487 A1**

(12) **EUROPEAN PATENT APPLICATION**

(43) Date of publication:
**30.06.2010 Bulletin 2010/26**

(51) Int Cl.:
*G01C 21/16* (2006.01)　　*G01S 5/00* (2006.01)
*G05D 1/10* (2006.01)

(21) Application number: **09177656.7**

(22) Date of filing: **01.12.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS** | (72) Inventors:<br>• **Smoot, Bradley J.**<br>　**Morristown, NJ 07962-2245 (US)**<br>• **Ekhaguere, David E. U.**<br>　**Morristown, NJ 07962-2245 (US)**<br>• **Jakel, Thomas**<br>　**Morristown, NJ 07962-2245 (US)** |
| (30) Priority: **11.12.2008 US 332481** | |
| | (74) Representative: **Buckley, Guy Julian**<br>**Patent Outsourcing Limited**<br>**1 King Street**<br>**Bakewell**<br>**Derbyshire DE45 1DZ (GB)** |
| (71) Applicant: **Honeywell International Inc.**<br>**Morristown, NJ 07962 (US)** | |

(54) **Apparatus and method for unmanned aerial vehicle ground proximity detection, landing and descent**

(57)　A proximity detector, unmanned aerial vehicle (UAV), and method for outputting a displacement are provided. The proximity detector includes a velocity sensor, a displacement sensor, and integration logic. The integration login is configured to receive displacement values from the displacement sensor and integrate velocity values received from the velocity sensor. Based on the integrated velocity value and a first displacement value, the integration logic determines an estimated displacement value. A difference is determined between the estimated displacement value and a second displacement value. If the difference is less than a difference threshold, the second displacement value is output. The UAV and/or other vehicles may utilize the proximity sensor to provide data for vehicle control and operation, including maneuvering and landing the vehicle.

Figure 1

**Description**

**Field of the Invention**

This invention relates to the field of proximity detection. More particularly, this invention relates to proximity detection for landing unmanned aerial vehicles (UAVs).

**Background**

Unpiloted aircraft, such as UAVs, are becoming more widely used by the military/police, rescue, scientific, and commercial communities. One definition of a UAV is an unmanned device capable of controlled, sustained, and powered flight. As such, the designs of UAVs consist of aircraft of various sizes, capabilities, and weights. A typical UAV consists of a propulsion device, such as a turbine or engine, a navigation system, and one or more sensors. The one or more sensors may include proximity detectors for detecting nearby objects. As the UAV is unmanned, computer software executing on one or more processors aboard the UAV partially or completely controls the UAV.

Often the weight of the UAV is a critical factor, if not the critical factor, during design and manufacturing. Additional UAV weight requires additional fuel and engine power during operation and thus may reduce the operating range and/or time of the UAV. For portable UAVs, a user of the UAV likely carries the portable UAV before operation, and so additional weight potentially reduces user acceptance of the portable UAV.

**SUMMARY**

A first embodiment of the invention provides a proximity detector. The proximity detector includes a displacement sensor, a velocity sensor, and integration logic. The displacement sensor is configured to send a displacement value. The velocity sensor is configured to send a velocity value. The integration logic is configured to: (i) receive a first displacement value from the displacement sensor, (ii) integrate a velocity value received from the velocity sensor, (iii) determine an estimated displacement value based on the integrated velocity value and the first displacement value, (iv) determine a difference between the estimated displacement value and a second displacement value received from the displacement sensor, and (v) if the difference is less than a difference threshold, output the estimated displacement value.

A second embodiment of the invention provides a method of outputting a displacement. A plurality of velocity values and a plurality of displacement values are received. An estimated displacement value is determined based on a first displacement value of the plurality of displacement values and at least one of the plurality of velocity values. The estimated displacement value is compared to a second displacement value of the plurality of displacement values. If the comparison is less than a difference threshold, an output displacement value is output.

A third embodiment of the invention provides an unmanned aerial vehicle (UAV). The UAV includes a propulsion unit and a proximity detector. The proximity detector includes a displacement sensor, a velocity sensor, a processor, data storage, and machine-language instructions. The displacement sensor is configured to send a displacement value. The velocity sensor is configured to send a velocity value. The machine-language instructions are stored in the data storage and configured to instruct the processor to perform functions. The functions include (i) receiving a first displacement value from the displacement sensor that represents an above-ground-level value, (ii) integrating a velocity value received from the velocity sensor over time, where the velocity value represents a velocity along a fixed axis corresponding to the above-ground-level value, (iii) determining an estimated displacement value based on the integrated velocity value and the first displacement value, (iv) determining a difference between the estimated displacement value and a second displacement value received from the displacement sensor, and (v) if the difference is less than a difference threshold and the estimated displacement value is less than a displacement threshold, determining the UAV is proximate to ground.

**BRIEF DESCRIPTION OF THE DRAWINGS**

**Various examples of embodiments are described herein with reference to the following drawings, wherein like numerals denote like entities, in which:**

Figure 1 shows an example scenario for landing an unmanned aerial vehicle (UAV), in accordance with embodiments of the invention;
Figure 2 shows an example UAV, in accordance with embodiments of the invention;
Figure 3 is a block diagram of an example proximity detector, in accordance with embodiments of the invention;
Figure 4 is a block diagram of example integration logic, in accordance with embodiments of the invention; and
Figure 5 is a flowchart depicting an example method for outputting a displacement, in accordance with embodiments of the invention.

## DETAILED DESCRIPTION

The present invention is directed to a proximity sensor. The proximity detector may receive measurements of displacement or position and/or velocity relative to a known reference, such as the ground. An ultrasonic sensor, a laser sensor, or similar sensor may make the displacement measurements and an inertial measurement unit (IMU) or similar sensor may make the velocity measurements.

The proximity detector may determine the accuracy of the measurements. In particular, the proximity detector may use one of the displacement measurements as a base-displacement value, integrate a velocity measurement over time, and add the base-displacement value and integrated-velocity value to determine an estimated-displacement value. The estimated-displacement value may be compared to a later-displacement value that is determined after the base-displacement value. If the estimated-displacement value and the later-displacement value are within a threshold, the later-displacement value may be determined to be accurate.

The proximity detector may output an output-displacement value. If the later-displacement value is accurate, the output-displacement value may be the later-displacement value, the estimated-displacement value, or an average of the later-displacement value and the estimated-displacement value. If the later-displacement value is determined to be inaccurate, the output-displacement value may be the estimated-displacement value.

For example, at a time t a displacement of a UAV may be 5 meters above ground level (AGL) and a velocity of the UAV may be -0.4 meters per second. The sign of the velocity may indicate the direction of the UAV relative to the ground; *e.g.*, positive velocities indicate the UAV is ascending and negative velocities indicate the UAV is descending. Then, at a time $t + 1$ second, a second displacement of the UAV may be 4.5 meters. The estimated displacement may be calculated with the base-displacement value of 5 meters and the integrated velocity value over the 1 second between displacement measurements of: -0.4 meters/second * 1 second = -0.4 meters. The corresponding estimated-displacement value would be 5 meters - 0.4 meters = 4.6 meters.

The difference between the estimated-displacement value of 4.6 meters and the second (or later) displacement of 4.5 meters is 0.1 meter. If the difference of 0.1 meter exceeds the difference threshold, the proximity detector may determine the displacement sensor is inaccurate and output the estimated-displacement value of 4.6 meters as the output-displacement value.

On the other hand, if the difference of 0.1 meter is less than the difference threshold, the proximity detector may determine that the displacement sensor is accurate. Then, the proximity detector may output 4.5 meters (the second displacement value), 4.55 meters (the average of the second displacement value and the estimated-displacement value), or 4.6 meters (the estimated-displacement value). The proximity detector may indicate an error range as well as an output; *e.g.*, a output-displacement value of 4.55 $\pm$ 0.05 meters.

The proximity detector may be used to land the UAV. The proximity detector may be activated when the UAV gets close to the ground. Then, the output-displacement value of the proximity detector may be used as an AGL (or altitude) value of the UAV. The landing sequence of the UAV may then be controlled by landing software and/or logic aboard the UAV based on the AGL value(s) generated by the proximity detector.

### Example UAV Landing Scenario

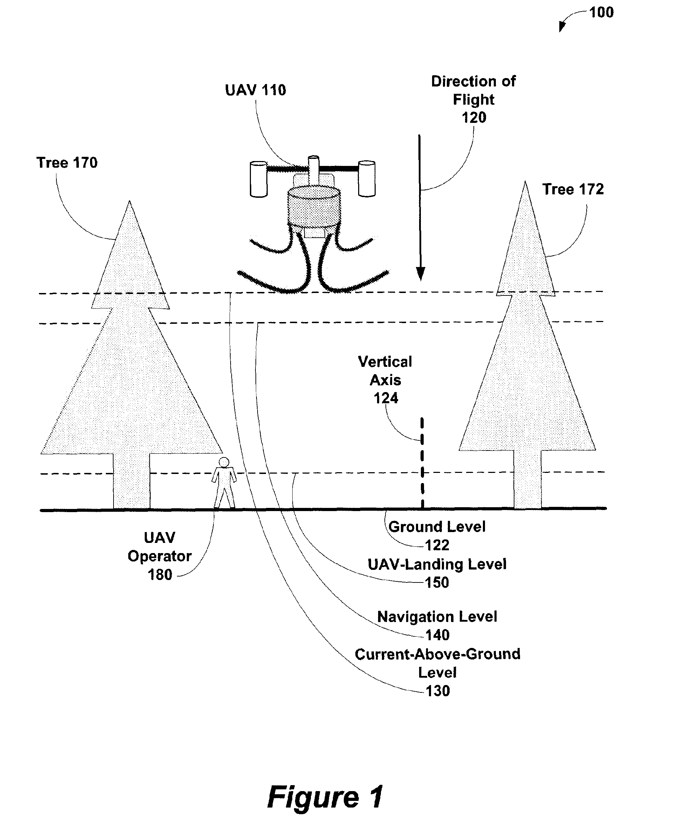

Turning to the figures, Figure 1 shows an example scenario 100 for landing a UAV 110, in accordance with embodiments of the invention. As shown in Figure 1, the UAV 110 is flying along a direction of flight 120 between trees 170 and 172. Various levels above ground level 122 (AGL) are reached as the UAV 110 descends along a vertical axis 124. While the direction of flight 120 is shown in Figure 1 as being aligned with the vertical axis 124, in general the direction of flight may or may not be aligned with the vertical axis 124. That is, in addition to a vertical component of the direction of flight 120 shown in Figure 1 (*i.e.,* a component aligned with the vertical axis), there may be a horizontal component (*i.e.*, a component aligned with the ground level 122) of the direction of flight 120 as the UAV 110 lands.

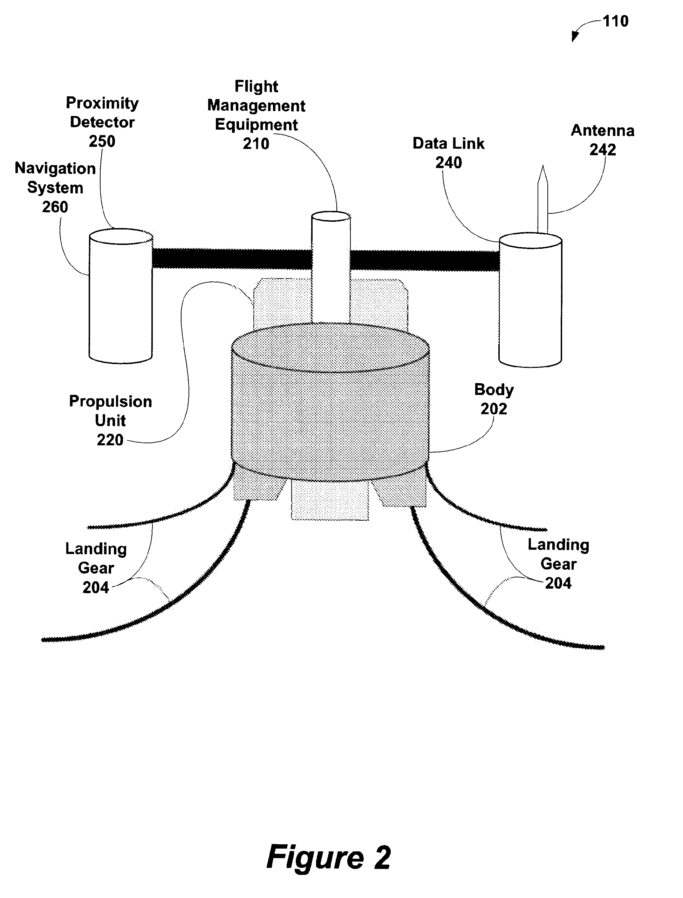

As the UAV 110 descends from a current-above-ground level 130, it may reach various altitudes above the ground level 122. Flight-management equipment, described in more detail with respect to Figure 2 below, aboard the UAV 110 may land the UAV 110 based on its altitude. Alternatively, a UAV operator 180 in communication with the UAV 110 may provide instructions for landing the UAV 110 and/or observe the performance of the flight-management equipment.

The UAV 110 may first descend to a navigation level 140, wherein the flight-management equipment may activate a proximity detector for more accurate AGL values. Then, the UAV 110 may descend, preferably slowly, to a UAV-landing level 150. At the UAV-landing level 150, a final landing sequence may begin. During the final landing sequence, the flight-management equipment may instruct a propulsion unit aboard the UAV 110, described in more detail with respect to Figure 2 below, for landing. For example, the flight-management equipment may instruct the propulsion unit to shut off, allowing the UAV 110 to fall to the ground. As another example, the flight-management equipment may instruct the propulsion unit to change output (i. e., speed up or slow down) and/or simultaneously alter the direction of flight 120. As part of the final landing sequence, the flight-management equipment also may include prepare the UAV 110 for landing (*e.g.*, activating landing gear or other flight-management equipment) before landing the UAV 110.

**An Example UAV**

Figure 2 shows the example UAV 110, in accordance with embodiments of the invention. Figure 2 shows the UAV 110 with a body 202, landing gear 204, flight-management equipment 210, a propulsion unit 220, a data link 240 with an antenna 242, a proximity detector 250, and a navigation system 260.

For structural support and other reasons, the UAV 110 may have a body 202 and landing gear 204. The shapes of the body 202 and/or landing gear 204 shown in Figure 2 are examples only and may vary. For example, the body 202 may have an aerodynamic shape, such as found in a body of a conventional manned aircraft. The landing gear 204 may or may not be retractable into the body 202.

The flight-management equipment 210 may provide guidance to the UAV 110, akin to the control provided by a human pilot in a manned aircraft. The flight-management equipment 210 may include flight controllers and/or servos (electro-mechanical devices) that control various flight-control surfaces of the UAV 110. For example, one or more servos may control a rudder or aileron(s) of the UAV 110. The flight-management equipment 210 may include a fan actuator, instead or as well. In particular, the flight-management equipment 210 may include computer hardware and/or software to provide the functionality of the flight-management equipment described above with respect to Figure 1, including controlling a final landing sequence and/or issuing commands to retract or extract the landing gear 204 (if possible).

The propulsion unit 220 may provide power to move the UAV 110. The propulsion units may include one or more engines, fans, pumps, rotors, belts, and/or propellers. One or more engine control units (ECUs) and/or power control units (PCUs) may control the propulsion unit 220. For example, an ECU may control fuel flow in an engine based on data received from various engine sensors, such as air and fuel sensors. The propulsion unit 220 may have one or more fuel tanks, one or more fuel pumps to provide the fuel from the fuel tank(s) to the propulsion unit 220. The propulsion unit 220 may also include one or more fuel-level sensors to monitor the fuel tank(s).

The data link system 240 may permit communication between the UAV 110 and other devices. For example, the data link system may permit communication with other UAVs in use at the same time as the UAV 110. The data link system 240 may permit communication with one or more ground control devices (not shown). A UAV operator may guide and/or observe the UAV 110 using the one or more ground control devices, which may include sending commands, data, and/or receiving notifications from the UAV 110.

The data link system 240 may use one or more wireless communication devices, such as an antenna 242, for communication. In an alternative not shown in Figure 2, the data link system 240 may use one or more wired communication devices, perhaps while the UAV 110 is tethered to the ground.

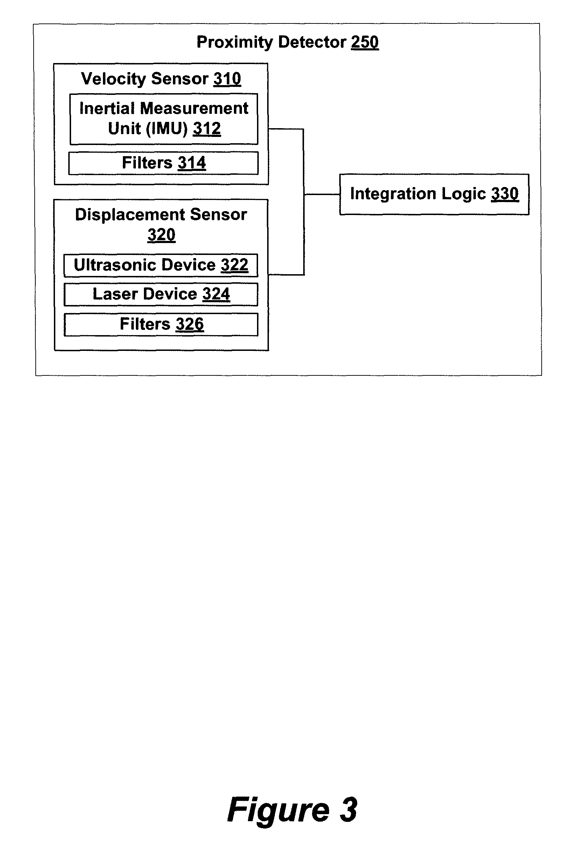

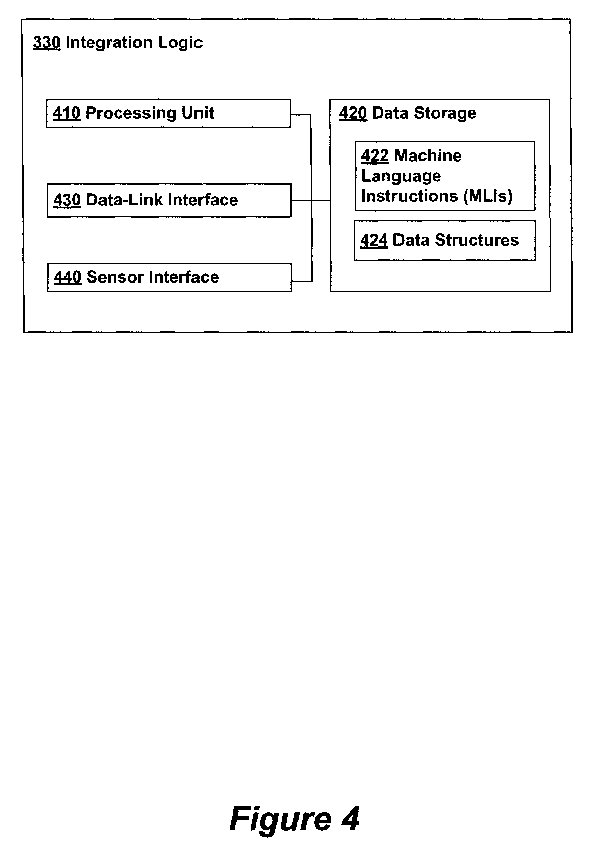

The UAV 110 may have a proximity detector 250. The proximity detector is described in more detail with reference to Figures 3 and 4 below. The proximity detector 250 may be a standalone detector or part of a navigation system 260 that provides navigational data, including data about nearby aircraft, to the UAV 110. The navigation system 260 may include other location devices than the proximity detector 250, such as, but not limited to, magnetometers, gyroscopes, lasers, Global Positioning System (GPS) receivers, altimeters, and other navigation components. The location devices may include additional sensors to provide additional data about the environment for the UAV 110, such as pressure sensors, thermometers, and/or other environment sensors.

**An Example Proximity Detector**

Figure 3 is a block diagram of an example proximity detector 250, in accordance with embodiments of the invention. The proximity detector 250 includes a velocity sensor 310, a displacement sensor 320, and integration logic 330. When used in a UAV where weight is typically at a premium, the velocity sensor 310, displacement sensor 320, and the integration logic 330 are preferably each light weight devices. The velocity sensor 310 and the displacement sensor 320 may be configured to send one or more velocity values or one or more displacement values, respectively, to the integration logic 330. The integration logic 330 is described in more detail with respect to Figure 4 below.

As shown in Figure 3, an inertial measurement unit (IMU) 312 may be used as the velocity sensor. The IMU 312 may include one or more gyroscopes and/or one or more accelerometers. Each of the gyroscopes and/or accelerometers may be associated with an axis of movement, such as a pitch axis, roll axis, or yaw axis, and the axes of movement may be orthogonal to each other (*e.g.*, representing x, y, and/or z coordinate axes). Preferably, the IMU 312 is the HG1930AD IMU manufactured by Honeywell Aerospace of Phoenix, Arizona, U.S.A. The IMU 312 may determine velocity, acceleration, and/or displacement values with respect to the axes of movement.

The IMU 312 may have one or more temperature sensors or thermometers. Based on the temperature recorded by the temperature sensors, the IMU 312 may generate temperature-adjusted velocity, acceleration, and/or displacement values. To minimize weight and for other reasons, the gyroscopes, accelerometers, and/or other sensors in the IMU 312 may be manufactured using micro-electro-mechanical system (MEMS) technologies.

The velocity sensor 310 may utilize one or more filters 314 to process the IMU 312 output. The filters 314 may include a Kalman filter. The Kalman filter is an optimal recursive data processing algorithm that may be used for stochastic estimation from noisy measurements, such as sensor measurements, that accounts for all information made available to the filter. The Kalman filter is described in more detail by Peter S. Mayback, "Stochastic Models, Estimation, and Control", Vol. 1, Academic Press, NY, 1979, p. 1-19, available at http://www.cs.unc.edu/~welch/media/pdf/maybeck ch1.pdf (last visited November 6, 2008), and by G. Welch and G. Bishop, "An Introduction to the Kalman Filter", SIGGRAPH 2001, Course 8, 2001, Association for Computing Machinery (ACM), Inc., available at http://www.cs.unc.edu/~tracker/media/pdf/SIGGRAPH2001 CoursePack 08.pdf (last visited November 6, 2008). In some embodiments, the filters 314 may be included in the IMU 312, and thus the velocity, acceleration, and/or displacement values output from the IMU 312 may be filtered output values.

The velocity sensor 310 may then output velocity, acceleration, and/or displacement values from the IMU 312 and/or filters 314.

The displacement sensor 320 may use any technology suitable for determining a displacement value relative to a known reference, such as a ground level or a sea level. In particular, the displacement sensor 320 preferably uses an ultrasonic device 322 to determine the displacement value. Most preferably, the ultrasonic device 322 is the MINI-AE PB Ultrasonic Transducer (Part No. 616100) manufactured by SensComp, Inc. of Livonia, Michigan, U.S.A. The ultrasonic device 322 may include a sound emitter (*e.g.*, a speaker) that emits sound waves with a known velocity and determine a displacement relative to the known reference based on the amount of time taken to detect a sound wave that reflected from the known reference. Thus, the ultrasonic device 322 may include a sound-wave detector (*e.g.*, a microphone) and a timer as well.

The displacement sensor 320 also or instead may use a laser device 324 to determine the displacement. The laser device 324 may include a laser emitter that emits a laser beam with a known velocity and determine a displacement relative to the known reference based on the amount of time taken to detect a laser beam that reflected from the known reference. Thus, the laser device 324 may include a laser detector and a timer as well.

One or more filters 326 may filter the displacement values generated by the ultrasonic device 322 and/or the laser device 324. The filters 326 may include a Kalman filter, described above with reference to the filters 314. In some embodiments, the filters 326 may be part of the ultrasonic device 322 and/or the laser device 324.

As with the IMU 312, the ultrasonic device 322 and/or laser device 324 may have one or more temperature sensors to provide temperature data, perhaps for use in generating temperature-adjusted displacement values. Other sensors, such as wind and/or light sensors, may sense and/or determine environmental conditions and thus provide inputs to correct acceleration, velocity, and/or displacement values for environmental conditions.

The ultrasonic devices, lasers, temperature sensors, and/or other sensors in the ultrasonic device 322 and/or laser device 324 may be manufactured using micro-electro-mechanical system (MEMS) technologies. In addition to the technologies listed above, the displacement sensor 320 and/or velocity sensor 310 may use other technologies, such as, but not limited to radar, Global Positioning System (GPS) and/or sonar technologies to determine the displacement, velocity and/or acceleration values.

Preferably, the velocity sensor 310 and the displacement sensor 320 utilize different technologies. As such, the values from a sensor utilizing one technology, such as IMU 312 utilizing gyroscopes and/or accelerometers, may be corrected and/or verified by the integration logic 330 from another sensor utilizing a different technology, such as the ultrasonic device 322 using sound emitter(s) and detector(s) and/or the laser device 324 using laser emitter(s) and laser detectors(s). In particular, the IMU 312 may be subject to "drift" or accumulated error that can be periodically corrected by the integration logic 330 and/or velocity sensor 310 based on displacement values received from the ultrasonic device 322 and/or laser device 324.

Similarly, if the displacement sensor 320 fails, the integration logic 330 may determine a displacement value using previous displacement value(s) received from the displacement sensor 320 and/or velocity values data from the velocity sensor 310.

For example, suppose that the displacement sensor 320 fails at a time $t_{FAIL}$ with a last displacement value of 3.2 meters AGL. Then, suppose the velocity sensor 310 provides example velocity values as shown below in Table 1:

**Table 1**

| Time | Velocity Value |
|---|---|
| $t_{FAIL}$ + 1 second | -0.02 meters/second |
| $t_{FAIL}$ + 2 seconds | -0.03 meters/second |
| $t_{FAIL}$ + 3 seconds | -0.01 meters/second |

5

Displacement values, including the displacement vale at time $t_{FAIL}$ + 3 seconds, can be determined by integrating the velocity values over time using the following formula:

$$(1) \; S = S_o + \int_{t=t0}^{t1} v \; dt \, ,$$

where:

$S$ = the displacement,
$S_0$ = an initial displacement,
$t0$ = a starting time,
$t1$ = an ending time, and
$v$ = the velocity.

The discrete version of formula (1) is:

$$(2) \; S = S_o + \sum_{i=1}^{n} v(t_i) \, (t_i - t_{i-1}) \, ,$$

where:

$S$ = the displacement,
$S_0$ = an initial displacement,
$i$ = index value ,
$t_i$ = time value i for discrete time values $t_0$ ... $t_n$, and
$v(t_i)$ = instantaneous velocity values at times $t_1$ ... $t_n$

Using formula (2) for the example above, including the data in Table 1, the displacement value at time $t_{FAIL}$ + 3, with $S_0$ = 3.2 meters and $n$ = 3 is:

$$S(t_{FAIL} + 3) = S_o + \sum_{i=1}^{n} v(t_i) \, (t_i - t_{i-1})$$

$$= 3.2 \text{ m} + [(-0.02 \text{ m/s})((t_{FAIL} + 1) - t_{FAIL})\text{s} + (-0.03 \text{ m/s})((t_{FAIL} + 2) - (t_{FAIL} + 1))\text{s} + (-0.01 \text{ m/s})((t_{FAIL} + 3) - (t_{FAIL} + 2))\text{s}]$$

$$= 3.2 \text{ m} + [(-0.02\text{m}) + (-0.03\text{m}) + (-0.01\text{m})]$$

$$= 3.2 \text{ m} - 0.06\text{m} = 3.14 \text{ m}.$$

Then, the value of 3.14m AGL, calculated by integrating the velocity over time, may be used as the displacement value at time $t_{FAIL}$ + 3. Note that, while the technique of integrating the velocity values over time is discussed above in the context of failing sensors, a sensor need not fail to utilize this technique.

**Example Integration Logic**

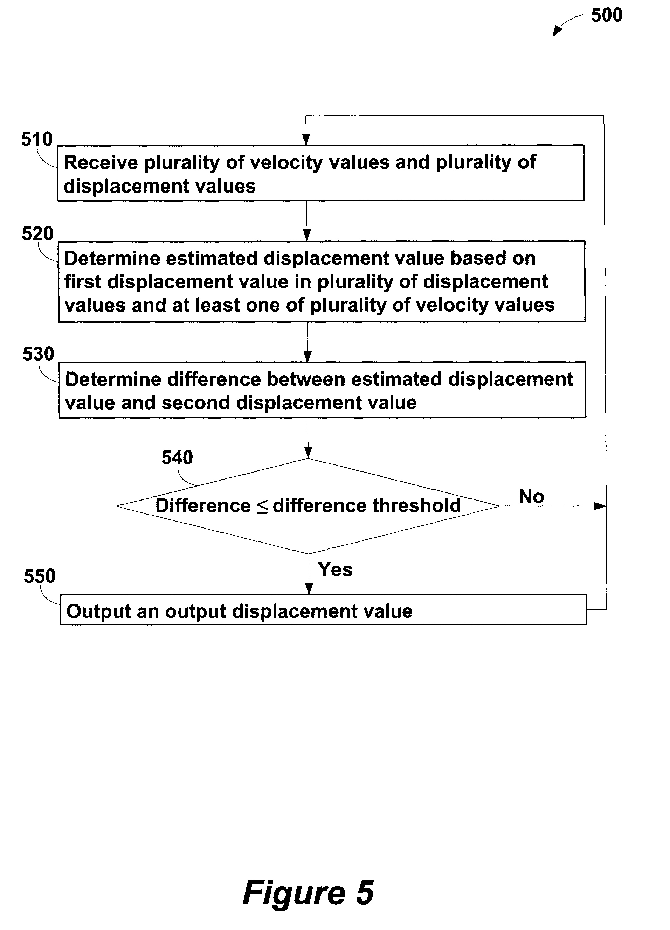

Figure 4 is a block diagram of example integration logic 330, comprising a processing unit 410, data storage 420, a data-link interface 430, and a sensor interface 440, in accordance with embodiments of the invention. The integration logic 330 is preferably a light-weight embedded processor, but may be a desktop computer, laptop or notebook computer, personal data assistant (PDA), mobile phone, or any similar device that is equipped with a processing unit capable of executing machine-language instructions that implement at least part of the herein-described method 500, described in more detail below with respect to Figure 5, and/or herein-described functionality of integration logic, flight management equipment, a navigation system, and/or a data link.

The processing unit 410 may include one or more central processing units, computer processors, mobile processors, digital signal processors (DSPs), microprocessors, computer chips, and similar processing units now known and later developed and may execute machine-language instructions and process data.

The data storage 420 may comprise one or more storage devices. The data storage 420 may include read-only memory (ROM), random access memory (RAM), removable-disk-drive memory, hard-disk memory, magnetic-tape memory, flash memory, and similar storage devices now known and later developed. The data storage 420 comprises at least enough storage capacity to contain machine-language instructions 422 and data structures 424.

The machine-language instructions 422 and the data structures 424 contained in the data storage 420 include instructions executable by the processing unit 410 and any storage required, respectively, to perform some or all of the herein-described functions of integration logic, flight management equipment, a navigation system, a data link, and/or to perform some or all of the procedures described in method 500.

The data-link interface 430 may be configured to send and receive data over a wired-communication interface and/or a wireless-communication interface. The wired-communication interface, if present, may comprise a wire, cable, fiber-optic link or similar physical connection, such as a USB, SCSI, Fire-Wire, and/or RS-232 connection, to a data network, such as a wide area network (WAN), a local area network (LAN), one or more public data networks, such as the Internet, one or more private data networks, or any combination of such networks. If the integration logic 330 is part of a UAV, such as the UAV 110, the UAV may be tethered to the ground before utilizing the wired-communication interface of the data-link interface 430.

The wireless-communication interface, if present, may utilize an air interface, such as a Bluetooth™, ZigBee, Wireless WAN (WWAN), Wi-Fi, and/or WiMAX interface to a data network, such as a WWAN, a Wireless LAN, one or more public data networks (*e.g.*, the Internet), one or more private data networks, or any combination of public and private data networks. In some embodiments, the data-link interface 430 is configured to send and/or receive data over multiple communication frequencies, as well as being able to select a communication frequency out of the multiple communication frequency for utilization. The wireless-communication interface may also, or instead, include hardware and/or software to receive communications over a data-link via an antenna, such as the antenna 242.

The sensor interface 440 may permit communication with one or more sensors, including but not limited to the velocity sensor 310 and the displacement sensor 320 shown in Figure 3. The sensor interface 440 may permit the sensors to provide sensor data, such as acceleration values, velocity values, and/or displacement values, to the integration logic 330 and/or to receive commands that permit sensor maintenance (*e.g.*, setup commands, configuration parameter settings, and the like). The sensor interface 440 may include a wired-sensor interface and/or a wireless-sensor interface. The wired-sensor interface and the wireless-sensor interface may utilize the technologies described above with respect to the wired-communication interface of the network-communication interface 430 and the wireless-communication interface of the network-communication interface 430, respectively.

## Example Method for Outputting a Displacement Value

Figure 5 is a flowchart depicting an example method 500 for outputting a displacement value, in accordance with an embodiment of the invention. It should be understood that each block in this flowchart and within other flowcharts presented herein may represent a module, segment, or portion of computer program code, which includes one or more executable instructions for implementing specific logical functions or steps in the process. Alternate implementations are included within the scope of the example embodiments in which functions may be executed out of order from that shown or discussed, including substantially concurrently or in reverse order, depending on the functionality involved, as would be understood by those reasonably skilled in the art of the described embodiments.

Method 500 begins at block 510. At block 510, a plurality of velocity values and a plurality of displacement values are received. A velocity sensor and a displacement sensor may send the plurality of velocity values and the plurality of displacement values, respectively, and/or integration logic may receive these pluralities.

The plurality of velocity and/or displacement values may be sent and/or received only when a displacement value (or a velocity value) reaches a threshold. For example, in the context of a UAV, each of the plurality of displacement values may represent an AGL position of the UAV. When the AGL position of the UAV is less than a threshold, such as the navigation level described above with respect to Figure 1, the displacement sensor and the velocity sensor may begin sending the respective pluralities of displacement values and velocity values. At that time, the integration logic may then receive the plurality of displacement values and the plurality of velocity values. Similarly, the displacement sensor and the velocity sensor may send and/or the integration logic may receive the plurality of displacement value and the plurality of velocity values when the velocity is less than a threshold, such as a velocity of 0 (*e.g.*, when a UAV hovers).

In other embodiments, the plurality of displacement values and the plurality of velocity values may be sent and/or received when a displacement value and/or a velocity value exceeds a threshold; for example, when a displacement (*e.g.*, AGL position) of the UAV exceeds the UAV-landing level described above with respect to Figure 1. In still other embodiments, the plurality of displacement values and the plurality of velocity values may be sent and/or received when a displacement value and/or a velocity value is between a lower displacement (or velocity) threshold and an upper displacement (or velocity) threshold, such as when a UAV is between the UAV-landing level as a lower displacement threshold and the navigation level as an upper displacement threshold.

Each of the plurality of velocity values and each of the plurality of displacement values may be sent periodically, upon request from the integration logic, or using some other strategy. In particular, the integration logic may set or reset a displacement-sensor timer or a velocity-sensor timer upon receipt of a first displacement value or a first velocity value, respectively. The value of the displacement-sensor timer and/or velocity-sensor timer may be hardcoded or may be specified via a message, perhaps received over a data-link interface.

If the displacement-sensor timer expires before receiving a second displacement value immediately after the first displacement value, the integration logic may generate a displacement-sensor notification that the displacement sensor has failed. Similarly, if the velocity-sensor timer expires before receiving a second velocity value immediately after the first velocity value, the integration logic may generate a velocity-sensor notification that the velocity sensor has failed.

In the context of a UAV, the displacement-sensor notification and/or the velocity-sensor notification may be sent to a UAV operator in communication with the UAV, perhaps using a ground control device, to inform him or her of the respective failed sensor. In response to the notification, the integration logic and/or the UAV operator may instruct the UAV (perhaps via the ground control device) to maintain a position, such as an AGL position (*e.g.*, hover in place), to move to a destination, to move and then maintain position (*e.g.*, rise straight up to 50 meters AGL and then hover), and/or perform some other operation (*e.g.*, run built-in tests/diagnostics on the failed sensor).

At block 520, an estimated displacement value is determined based on a first displacement value of the plurality of displacement values and at least one of the plurality of velocity values. In particular, the estimated displacement value may be determined by (i) determining a change in displacement by integrating at least one of the plurality of velocity values over time and (ii) determining the estimated displacement value by adding the change in displacement to the first displacement value. The estimated displacement value may then be determined using formulas (1) and/or (2) indicated above with respect to Figure 4. The estimated displacement value may be determined after detection of a sensor failure, such as a failed displacement sensor or a failed velocity sensor.

At block 530, a difference is determined between the estimated displacement value and a second displacement value of the plurality of displacement values. The second displacement value be taken at a later time than the first displacement value. The difference may be determined by subtracting the estimated displacement value from the second displacement value or vice versa. The absolute value of the difference may be used as the difference as well.

At block 540, the difference may be compared to a difference threshold. The difference threshold may be hard coded or set by input from a message, perhaps received via the data-link interface. If the difference is less than or equal to the difference threshold, the method 500 may proceed to block 550. A notification may be output when the difference exceeds the difference threshold, perhaps to indicate that a sensor, such as the displacement sensor, may be out of service or in error. If the difference exceeds the difference threshold, the method 500 may proceed to block 510.

At block 550, an output displacement value is output. The output displacement value may be the second displacement value, the estimated displacement value, or an average of the second displacement value and the estimated displacement value. The output displacement value may be output to data storage (*i.e.*, stored in memory), via the data-link interface and/or via the sensor interface. After completing the procedures of block 550, method 500 may proceed to block 510.

Many of the elements described herein are functional entities that may be implemented as discrete or distributed components or in conjunction with other components, in any suitable combination and location, and as any suitable combination of hardware, firmware, and/or software.

**Claims**

1.   A proximity detector, comprising:

      a displacement sensor providing a displacement value;
      a velocity sensor providing a velocity value; and

integration logic configured to:

receive a first displacement value from the displacement sensor,
integrate a velocity value received from the velocity sensor,
determine an estimated displacement value based on the integrated velocity value and the first displacement value,
determine a difference between the estimated displacement value and a second displacement value received from the displacement sensor, and
responsive to the difference being less than a difference threshold, output the second displacement value.

2. The proximity detector of claim 1, wherein the integration logic is further configured to, responsive to the difference being greater than the difference threshold, determine the displacement sensor is inoperable.

3. The proximity detector of any of claims 1 or 2, wherein the integration logic is further configured to, responsive to the difference being greater than the difference threshold, determine the velocity sensor is inoperable.

4. The proximity detector of any of claims 1-3, wherein the integration logic is further configured to, responsive to the displacement being less than a displacement threshold, activate the velocity sensor.

5. The proximity detector of any of claims 1-4, wherein the velocity value is integrated over time along a fixed axis.

6. An unmanned aerial vehicle (UAV) comprising:

a propulsion unit; and
the proximity detector of any of claims 1-5.

7. A method of outputting a displacement, the method comprising:

receiving a plurality of velocity values and a plurality of displacement values;
determining an estimated displacement value based on a first displacement value of the plurality of displacement values and at least one of the plurality of velocity values;
determining a difference between the estimated displacement value and a second displacement value of the plurality of displacement values; and
responsive to the difference being less than a difference threshold, outputting an output displacement value.

8. The method of claim 7, wherein determining an estimated displacement value comprises:

determining a change in displacement by integrating at least one of the plurality of velocity values over time; and
determining the estimated displacement value by adding the change in displacement to the first displacement value.

9. The method of claim 8, wherein receiving the plurality of velocity values and the plurality of displacement values comprises receiving the plurality of velocity values responsive to a displacement value in the plurality of displacement values being less than a first displacement threshold.

10. The method of claim 9, wherein the plurality of displacement values are received from a displacement sensor, the method further comprising:

resetting a displacement-sensor timer upon receipt of each displacement value in the plurality of displacement values; and
responsive to not receiving a displacement value before expiration of the displacement-sensor timer, generating a notification that the displacement sensor has failed.

┌─ 100

Direction of
Flight
120

UAV 110

Tree 170

Tree 172

Vertical
Axis
124

UAV
Operator
180

Ground Level
122

UAV-Landing Level
150

Navigation Level
140

Current-Above-Ground
Level
130

*Figure 1*

**Figure 2**

**Figure 3**

**330** Integration Logic

**410** Processing Unit

**430** Data-Link Interface

**440** Sensor Interface

**420** Data Storage

**422** Machine Language Instructions (MLIs)

**424** Data Structures

# Figure 4

500

**510**
Receive plurality of velocity values and plurality of displacement values

**520**
Determine estimated displacement value based on first displacement value in plurality of displacement values and at least one of plurality of velocity values

**530**
Determine difference between estimated displacement value and second displacement value

**540**
Difference ≤ difference threshold — No

Yes

**550**
Output an output displacement value

# Figure 5

14

Europäisches
Patentamt

European
Patent Office

Office européen
des brevets

**EUROPEAN SEARCH REPORT**

Application Number

EP 09 17 7656

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 522 862 A1 (PIONEER ELECTRONIC CORP [JP]) 13 January 1993 (1993-01-13) * abstract; figures 3a, 5, 6 * * column 1, lines 1-20 * * column 2, line 40 - column 3, line 37 * * column 6, line 9 - column 10, line 56 * ----- | 1-10 | INV. G01C21/16 G01S5/00 G05D1/10 |
| X | US 5 906 655 A (FAN ZHEJUN [US]) 25 May 1999 (1999-05-25) * column 1, line 6 - column 2, line 3; figures 3-5 * * column 3, line 30 - column 4, line 44 * ----- | 1-10 | |
| X | US 2002/099481 A1 (MORI MASAKI [JP]) 25 July 2002 (2002-07-25) * abstract; figure 9 * * paragraphs [0017] - [0019] * * paragraphs [0042] - [0045] * * paragraphs [0067], [0076] * ----- | 1-10 | |
| X | US 6 029 111 A (CROYLE STEVEN R [US]) 22 February 2000 (2000-02-22) * figures 2,3,6a,6b * * column 4, line 10 - column 6, line 28 * * column 7, line 30 - column 12, line 59 * ----- | 1-10 | TECHNICAL FIELDS SEARCHED (IPC) G01C G01S G05D |
| X | WO 2006/137049 A1 (ISRAEL AIRCRAFT IND LTD [IL]; APPELMAN DINA [IL]; PINSKY ALEX [IL]; SI) 28 December 2006 (2006-12-28) * page 4, lines 9-31 * * page 8, line 24 - page 11, line 7 * * claims 6,7 * * figures 4,5 * ----- | 1-12 | |
| A | US 2004/267444 A1 (COATANTIEC JACQUES [FR] ET AL) 30 December 2004 (2004-12-30) * the whole document * ----- -/-- | 1-10 | |

The present search report has been drawn up for all claims

| Place of search | Date of completion of the search | Examiner |
|---|---|---|
| Munich | 19 May 2010 | Schriefl, Josef |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**Europäisches Patentamt**

**European Patent Office**

**Office européen des brevets**

# EUROPEAN SEARCH REPORT

Application Number

EP 09 17 7656

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 923 286 A (DIVAKARUNI SUDHAKAR P [US]) 13 July 1999 (1999-07-13) * the whole document * ----- | 1-10 | |
| | | | **TECHNICAL FIELDS SEARCHED (IPC)** |

The present search report has been drawn up for all claims

| Place of search | Date of completion of the search | Examiner |
|---|---|---|
| Munich | 19 May 2010 | Schriefl, Josef |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 17 7656

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2010

| Patent document cited in search report | | | Publication date | Patent family member(s) | | Publication date |
|---|---|---|---|---|---|---|
| EP | 0522862 | A1 | 13-01-1993 | DE | 69204926 D1 | 26-10-1995 |
| | | | | DE | 69204926 T2 | 23-05-1996 |
| | | | | JP | 3267310 B2 | 18-03-2002 |
| | | | | JP | 5018768 A | 26-01-1993 |
| | | | | US | 5272483 A | 21-12-1993 |
| US | 5906655 | A | 25-05-1999 | AU | 735246 B2 | 05-07-2001 |
| | | | | AU | 5933698 A | 15-10-1998 |
| | | | | GB | 2323989 A | 07-10-1998 |
| | | | | JP | 10311735 A | 24-11-1998 |
| US | 2002099481 | A1 | 25-07-2002 | JP | 4229358 B2 | 25-02-2009 |
| | | | | JP | 2002215236 A | 31-07-2002 |
| US | 6029111 | A | 22-02-2000 | AT | 337541 T | 15-09-2006 |
| | | | | DE | 69636482 T2 | 23-08-2007 |
| | | | | EP | 0870174 A1 | 14-10-1998 |
| | | | | JP | 2000502802 T | 07-03-2000 |
| | | | | WO | 9724583 A1 | 10-07-1997 |
| WO | 2006137049 | A1 | 28-12-2006 | AT | 440316 T | 15-09-2009 |
| | | | | EP | 1899778 A1 | 19-03-2008 |
| | | | | EP | 1947542 A1 | 23-07-2008 |
| US | 2004267444 | A1 | 30-12-2004 | CA | 2468237 A1 | 05-06-2003 |
| | | | | EP | 1466139 A1 | 13-10-2004 |
| | | | | FR | 2832796 A1 | 30-05-2003 |
| | | | | WO | 03046482 A1 | 05-06-2003 |
| US | 5923286 | A | 13-07-1999 | CA | 2250196 A1 | 30-04-1998 |
| | | | | DE | 69703893 D1 | 15-02-2001 |
| | | | | DE | 69703893 T2 | 26-04-2001 |
| | | | | EP | 0934535 A1 | 11-08-1999 |
| | | | | JP | 4014642 B2 | 28-11-2007 |
| | | | | JP | 2001502802 T | 27-02-2001 |
| | | | | WO | 9818016 A1 | 30-04-1998 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Peter S. Mayback.** Stochastic Models, Estimation, and Control. Academic Press, 1979, vol. 1, 1-19

- An Introduction to the Kalman Filter. **G. Welch ; G. Bishop.** SIGGRAPH 2001. Association for Computing Machinery (ACM), Inc, 2001, vol. 8